**Europäisches Patentamt**

**European Patent Office**

**Office européen des brevets**

(19)

(11) Veröffentlichungsnummer: **0 255 606**
**B1**

(12) # EUROPÄISCHE PATENTSCHRIFT

(45) Veröffentlichungstag der Patentschrift:
**25.10.89**

(51) Int. Cl.⁴: **C03B 3/00**

(21) Anmeldenummer: **87109310.0**

(22) Anmeldetag: **29.06.87**

(54) **Vorwärmer für Glasscherben.**

(30) Priorität: **06.08.86 DE 3626076**

(43) Veröffentlichungstag der Anmeldung:
**10.02.88 Patentblatt 88/6**

(45) Bekanntmachung des Hinweises auf die Patenterteilung:
**25.10.89 Patentblatt 89/43**

(84) Benannte Vertragsstaaten:
**AT BE CH DE ES FR GB GR IT LI NL SE**

(56) Entgegenhaltungen:
**US-A- 3 459 411**
**US-A- 4 362 543**
**US-A- 4 410 347**

(73) Patentinhaber: **Sorg GmbH & Co. KG, Im
Aller 23 Postfach 520, D-8770 Lohr/Main(DE)**

(72) Erfinder: **Pieper, Helmut, Dipl.-Ing., Buchenweg 19,
D-8770 Lohr/Main(DE)**

(74) Vertreter: **Patentanwälte Schulze Horn und Hoffmeister,
Goldstrasse 36, D-4400 Münster(DE)**

ACTORUM AG

**Beschreibung**

Die Erfindung betrifft einen Vorwärmer für Glasscherben, in welchem in einem Erwärmungteil von einer Heißgaszuleitung kommendes Heißgas unter Wärmeabgabe an die Scherben durch diese hindurchleitbar und durch eine Heißgas-Ableitung ableitbar ist, und wobei die Scherben zwischen einen Scherbenschacht bildenden und einen Gaseintritt sowie Gasaustritt erlaubenden Führungswänden geführt ist.

Die Vorwärmung von Glasscherben als wiederzuverwerteter Rohstoff für die Erschmelzung von Glas mittels Heißgas, im allgemeinen Abgas von Glasschmelzöfen, ist ein seit langem bekanntes Verfahren zur Erzielung einer möglichst günstigen Energiebilanz und - als Nebeneffekt - einer gewissen Filterung des Abgases bei der Glaserzeugung und wird beispielsweise in der DE-PS 21 61 419 beschrieben. In der genannten Schrift wird weiterhin eine Vorrichtung für die Vorwärmung von Glasbruch mittels Abgas aus Glasschmelzöfen beschrieben. Diese Vorrichtung besteht im wesentlichen aus einem stehenden Zylinder, welcher mit Glasbruch gefüllt ist und in welchen mittels Rohrstutzen Heißgas im unteren Bereich eingeführt und in einem höher gelegenen Bereich abgezogen wird. Zentral im Zylinder ist ein perforiertes Rohrstück angeordnet, daß als Strömungsleitkörper für das Heißgas dient.

Neben dieser Vorrichtung ist ein Vorwärmer bekannt, bei welchem Glasscherben in einem vertikalen Schacht zwischen zwei gasdurchlässigen Führungswänden geführt sind. Heißgas tritt hier durch die eine Führungswand in die Scherben ein, durchströmt diese im Querstrom und tritt durch die zweite gasdurchlässige Führungswand aus.

Nachteilig ist bei beiden bekannten Vorwärmern, daß es infolge des Kondensierens von Bestandteilen des Heißgases, in der Hauptsache Natriumbisulfat, zur Verklebung der Verbackung der einzelnen Scherben im Scherbenvorwärmer kommt, wodurch die Schüttfähigkeit der Scherben herabgesetzt wird oder sogar gänzlich verloren geht. Dies hat zur Folge, daß die aufgeheizten Scherben nur unter Schwierigkeiten aus dem Vorwärmer entnehmbar sind.

Weiterhin nachteilig bei den bekannten Vorwärmern ist, daß sie lediglich in einer festgelegten Betriebsweise betreibbar sind und somit nicht an unterschiedliche Eigenschaften der jeweils vorzuwärmenden Scherben anpaßbar sind.

Es stellt sich daher die Aufgabe, einen Vorwärmer der eingangs genannten Art zu schaffen, der die aufgeführten Nachteile vermeidet und der insbesondere einen störungsfreien Durchlauf und eine problemlose Entnahme der Glasscherben gewährleistet.

In weiterer Ausgestaltung der Erfindung soll der Vorwärmer an unterschiedliche Erfordernisse flexibel anpaßbar sein.

Die Lösung dieser Aufgabe gelingt erfindungsgemäß durch einen Vorwärmer der eingangs genannten Art, bei welchem wenigstens eine der Führungswände relativ zu der anderen Führungswand/den anderen Führungswänden unter Abstandsveränderung bewegbar ist.

Durch die Bewegbarkeit wenigstens einer der Führungswände des Scherbenschachtes können die in diesem befindlichen Glasscherben auf einfache Weise aufgelockert und schüttfähig gehalten oder wieder gemacht werden. Da die Betätigung der bewegbaren Führungswand von außen her erfolgen kann, sind innerhalb des Scherbenschachtes keine bewegbaren Einzelteile erforderlich. Ein starker Verschleiß infolge der Anwesenheit von Glasscherben und aggressiver Rauchgase wird so vermieden.

Eine bevorzugte Ausführung der Erfindung sieht vor, daß der Vorwärmer zwei im wesentlichen parallel zueinander verlaufende, jeweils von zwei etwa parallelen Führungswänden begrenzte Scherbenschächte aufweist, daß die beiden äußeren Führungswände fest angeordnet sind und daß die beiden inneren Führungswände unter Bildung eines Heißgas-Zwischenraumes voneinander beabstandet und zu einem bewegbaren Zentralkörper zusammengefaßt sind. Hierdurch wird bei minimalem mechanischem Aufwand ein hoher Durchsatz mit gleichzeitig gleichmäßiger Durchströmung der Scherben mit Heißgas erzielt.

Vorzugsweise ist der Zentralkörper an seinem oberen Ende gelenkig aufgehängt und mittels eines Unwucht- oder Exzenterantriebes oder dergleichen kontinuierlich oder periodisch in eine Schwing- oder Rüttelbewegung versetzbar. Diese Gestaltung ergibt einen unkomplizierten Aufbau und Antrieb des bewegbaren Zentralkörpers.

Weiterhin ist vorgesehen, daß außenseitig den beiden äußeren Führungswänden eine Heißgas-Verteiler- bzw. Sammelkammer zugeordnet ist und daß diese sowie der Heißgas-Zwischenraum zwischen den beiden inneren Führungswänden jeweils wahlweise einzeln oder in Gruppen mit der Heißgas-Zuleitung oder der Heißgas-Ableitung verbindbar sind. Hierdurch wird ein Betrieb des Vorwärmers in unterschiedlichen Betriebsweisen ermöglicht. So kann in bhängigkeit von bestimmten Parametern, wie z. B. Heißgastemperatur, gewünschte Glasscherbentemperatur, zulässiger Druckabfall oder maximal zulässige Strömungsgeschwindigkeit zwischen den Scherben, das Heißgas beispielsweis im Parallelbetrieb jeweils nur durch einen der Schächte oder im Serienbetrieb nacheinander durch beide Schächte geführt werden.

Weitere Anpassungsmöglichkeiten des Vorwärmers an unterschiedliche Parameter der oben genannten Art ergeben sich daraus, daß die beiden äußeren Führungswände jeweils in einen oberen und unteren Teilabschnitt unterteilt sind und daß jedem der Teilabschnitte jeweils eine gesonderte Heißgas-Verteiler- bzw. Sammelkammer zugeordnet ist, welche jeweils wahlweise mit der Heißgas-Zuleitung oder der Heißgas-Ableitung verbindbar sind. Beispielsweise kann hiermit das Heißgas zunächst von außen her quer durch den unteren Teil der Schächte geführt werden, dann im Inneren des von Heißgas-Zu- und Ableitung abgesperrten Zentralkörpers aufsteigen und von dort dann in Gegenrichtung quer durch den oberen Teil der Schächte strömen. In einer anderen Betriebsweise kann das Heißgas auch beiden Teilabschnitten der äußeren Führungswände zugleich zugeleitet werden, um dann von außen nach innen in den Zentralkörper und von dort zur Heißgas-Ableitung zu strömen. Aufgrund seiner unterschiedlichen Betriebsmöglichkeiten kann jeweils die optimale Betriebsweise des Vorwärmers gemäß Erfindung eingestellt werden. In weiterer Ausgestaltung der Erfindung kann diese Einstellung beispielsweise durch eine automatische Steuerung über entsprechende Schieber und/oder Klappen erfolgen.

Als Führungswände eignen sich insbesondere mit jalousieartig angeordneten Lamellen bestückte Lamellenwände. Die einzelnen Lamellen sind dabei logischerweise so angeordnet, daß sie zum Inneren des Schachtes hin geneigt sind und so eine Führung des Gemenges bewirken. Gleichzeitig erlauben sie durch die zwischen ihnen vorhandenen Zwischenräume einen Eintritt bzw. Austritt des Heißgases.

Um zu vermeiden, daß Falschluft durch das aufgegebene Gemenge hindurch in den Vorwärmer gelangt, ist vorgesehen, daß oberhalb des Erwärmungsteils ein Bunkerteil mit einem einen Gasabschluß bildenden Vorrat von Scherben angeordnet ist. Der hier befindliche Glasscherbenvorrat bildet einen im Vergleich zu den im Schacht selbst befindlichen Scherben wesentlich höheren Strömungswiderstand für Luft, so daß diese lediglich in unwesentlichen Mengen in den Vorwärmer gelangen kann.

Für den Fall, daß der Druckabfall des durch den Vorwärmer strömenden Gases zu hoch ist, kann in der Heißgas-Ableitung ein Sauggebläse angeordnet sein. Dieses kann zugleich mit für einen Unterdruck im Vorwärmer gegenüber dem atmosphärischen Luftdruck sorgen, wodurch z. B. eine wirkungsvolle Gasableitung aus einem Schmelzofen erreicht wird.

Um den Vorwärmer mit verminderter Leistung betreiben und um ihn ganz stillsetzen zu können, sind zweckmäßig die Heißgas-Zuleitung und die Heißgas-Ableitung über wenigstens eine absperrbare Verbindungsleitung unmittelbar miteinander verbunden.

Die Dimensionierung des Vorwärmers, speziell der Strömungsquerschnitte in den Führungswänden und Schächten erfolgt zweckmäßig so, daß die Gasgeschwindigkeit in den Schächten beim Durchtritt durch die Galsscherben so niedrig bleibt, daß Scherbenteilchen nicht mitgerissen werden. Vorzugsweise ist die Gasgeschwindigkeit so eingestellt, daß sich zumindest ein Teil der Staubteilchen aus dem Heißgas infolge von Geschwindigkeitsverminderung innerhalb der Scherben absetzt und so dem Schmelzofen wieder zugeführt wird. Ein weiterer Filtereffekt wird dadurch erzielt, daß Staubteilchen durch Adhäsionskräfte sowie zunächst gasförmige Bestandteile durch Kondensation während der Gasabkühlung an den Scherben angelagert werden. Aufgrund der unterschiedlichen Betriebsweisen des Vorwärmers besteht die Möglichkeit, diesen bei einem unzulässigen Ansteigen des Strömungswiderstandes infolge eines steigenden Anteils von Feinpartikeln und Kondensat während des Betriebes auf eine Betriebsweise mit niedrigerem Grund-Strömungswiderstand umzuschalten.

Ein bevorzugtes Ausführungsbeispiel der Erfindung wird im folgenden anhand einer Zeichnung näher erläutert. Die Figuren der Zeichnung zeigen im einzelnen:

Figur 1 einen Vorwärmer gemäß Erfindung im Vertikalschnitt,

Figur 2 den Vorwärmer aus Figur 1 im Querschnitt entlang der Linie II - II,

Figur 3 den Vorwärmer aus Figur 1 in vereinfachter, schematischer Darstellung, ebenfalls im Vertikalschnitt, in einer ersten Betriebsweise und

Figur 4 den Vorwärmer in der Darstellung gemäß Figur 3 in einer zweiten Betriebsweise.

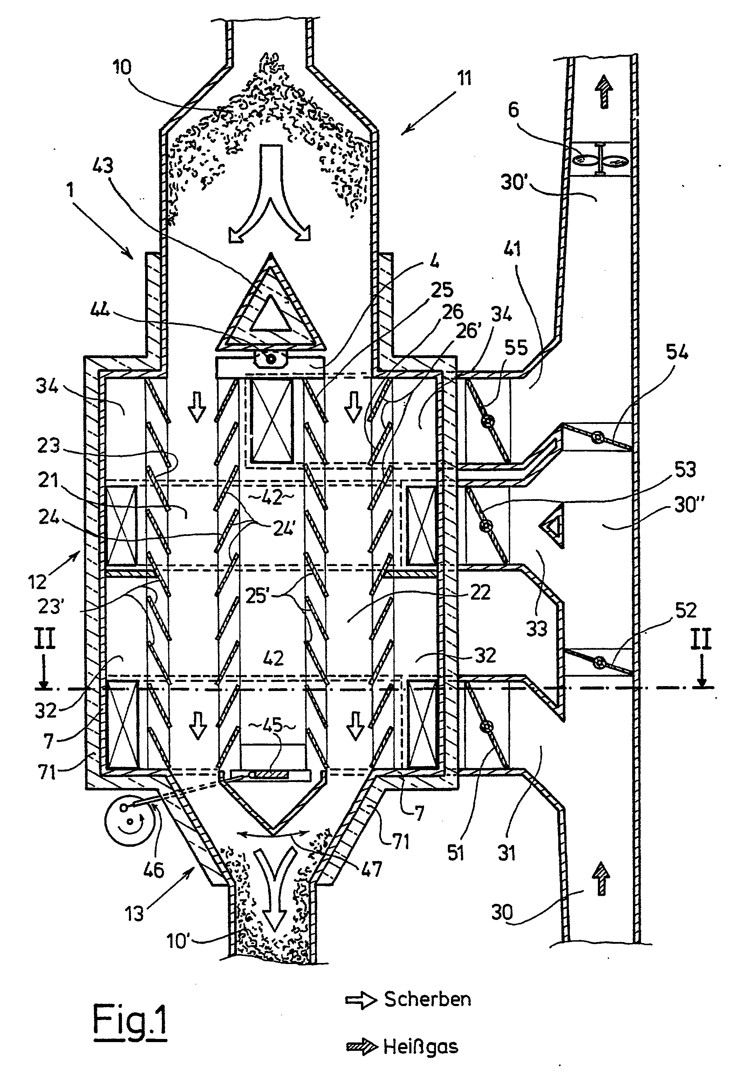

Wie die Figur 1 der Zeichnung zeigt, besteht das dargestellte Ausführungsbeispiel des erfindungsgemäßen Vorwärmers 1 im wesentlichen aus einem Erwärmungsteil 12, auf welchen ein Bunkerteil 11 aufgesetzt ist und an welchen sich nach unten hin ein Entnahmeteil 13 anschließt. Die genannten Teile des Vorwärmers 1 sind von einer Wandung 7 umgeben, welche im Bereich des Erwärmungsteils 12 sowie teilweise auch im Bereich des Bunkerteils 11 und des Entnahmeteils 13 mit einer Wärmeisolierung 71 versehen ist.

Im Bunkerteil 11 des Vorwärmers 1 ist ein Vorrat an Glasscherben 10 enthalten, welcher sich entsprechend den eingezeichneten Pfeilen durch zwei parallel zueinander verlaufende Glasscherbenschächte 21 und 22 nach und nach in Richtung zum Entnahmeteil 13 bewegt. Dort stehen dann vorgewärmte Glasscherben 10' z. B. für die Aufgabe auf einen Glasschmelzofen zur Verfügung.

Die Wärmeenergie zur Aufheizung der Glasscherben wird einem Heißgasstrom entnommen, welcher über eine Heißgas-Zuleitung 30 herangeführt wird. Das Heißgas kann über Zweigleitungn 31, 33 und 41 sowie Klappen 51, 52, 53, 54 und 55 auf unterschiedliche Art und Weise durch die Scherbenschächte 21 und 22 geleitet und schließlich einer Heißgas-Abführung 30' zugeführt werden.

Die Scherbenschächte 21 und 22 werden jeweils durch Lamellenwände 23 und 24 bzw. 25 und 26 begrenzt. Die Lamellen 23', 24', 25' und 26' der Lamellenwände 23 - 26 sorgen dafür, daß die Glasscherben im Inneren der Schächte 21 und 22 verbleiben und erlauben zugleich einen Durchtritt des Heißgases in die Scherben hinein bzw. wieder aus diesen heraus. Zur Verteilung und Sammlung des Heißgases sind an den schachtabgewandten Seiten der Lamellenwände 23 bis 26 Heißgas-Verteiler- und Sammelkammern 32, 34 und 42 angeordnet. Bei dem dargestellten Ausführungsbeispiel des Vorwärmers 1 sind die beiden außenseitigen Lamellenwände 23 und 26 jeweils in einen oberen und einen unteren Teilabschnitt unterteilt, welchen jeweils eine eigene Verteiler- bzw. Sammelkammer zugeordnet ist. Den beiden unteren Teilabschnitten ist jeweils eine der beiden Kammern 32 zugeordnet, welche gemeinsam über die Zweigleitung 31 und die Klappe 51 mit der Heißgas-Zuleitung 30 in Verbindung stehen. Den oberen Teilabschnitten ist jeweils eine der beiden Kammern 34 zugeordnet, welche gemeinsam über die Zweigleitung 33 sowie die Klappen 52, 53 und 54 wahlweise mit der Heißgas-Zuleitung 30 oder der Heißgas-Ableitung 30' verbindbar sind. Die zwischen den beiden inneren Lamellenwänden 24 und 25 vorhandene Heißgas-Kammer 42 ist bei diesem Ausführungsbeispiel über die Zweigleitung 41 sowie die Klappe 55 mit der Heißgas-Ableitung 30' verbunden.

Die beiden inneren Lamellenwände 24 und 25 mit ihren Lamellen 24' und 25' sowie der zwischen diesen vorhandenen Heißgas-Kammer 42 sind zu einem Zentralkörper 4 zusammengefaßt. Dieser ist an seinem oberen Ende 44 an einem den vom Bunkerteil 11 kommenden Scherbenstrom aufteilenden, quer durch den Bunkerteil verlaufenden Stromteiler 43 gelenkig aufgehängt. An seinem unteren Ende weist der Zentralkörper 4 wenigstens einen aus dem Vorwärmer 1 herausgeführten Betätigungshebel 45 auf, an welchem ein Exzenterantrieb 46 angreift. Mittels dieses Exzenterantriebes 46 kann der Zentralkörper 4 - wie durch den Bewegungspfeil 47 angedeutet - in eine Schwing- oder Rüttelbewegung versetzt werden, um die Scherben in den Schächten 21 und 22 schüttfähig zu halten bzw. zu machen. Außer durch einen Exzenterantrieb wie in diesem Ausführungsbeispiel kann die Bewegung des Zentralkörpers 4 auch auf anderem Wege erzeugt werden, z. B. auf elektromagnetischem Wege oder durch eine Kolben-Zylinder-Anordnung.

Zur Unterstützung des Heißgas-Durchsatzes durch den Vorwärmer 1 kann in der Heißgas-Ableitung 30' ein Sauggebläse 6 angeordnet sein.

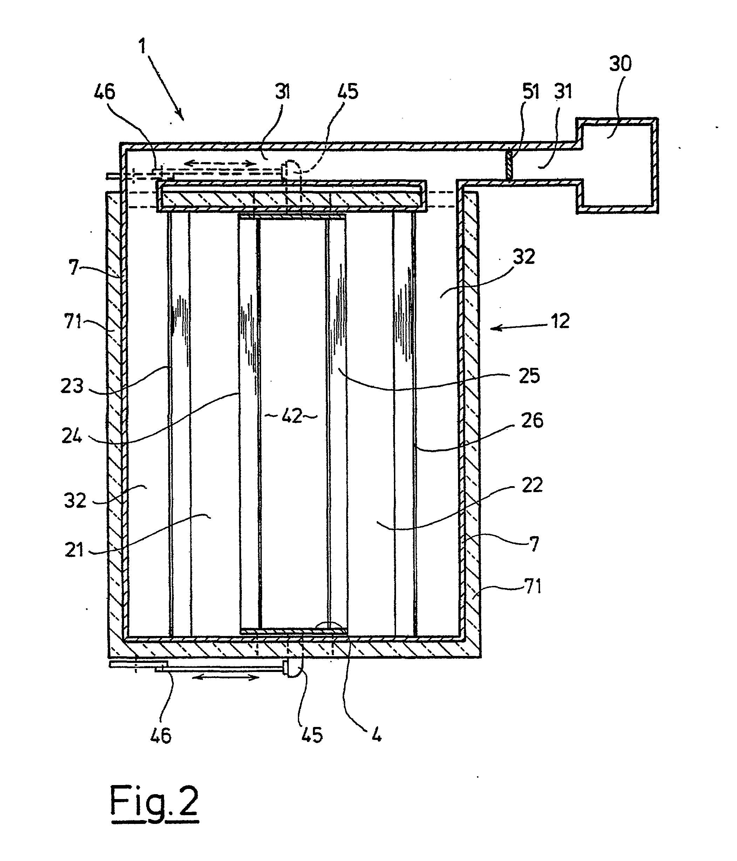

Figur 2 der Zeichnung zeigt einen Schnitt durch die Vorrichtung gemäß Figur 1 entlang der Linie II - II in Figur 1. Außenseitig ist auch in dieser Figur wieder die den Vorwärmer 1 umgebende, mit der Wärmeisolierung 71 versehene Wandung 7 erkennbar. Im Inneren des Vorwärmers 1, genauer seines Erwärmungsteils 12, sind die vier Lamellenwände 23, 24, 25 und 26 erkennbar, welche parallel zueinander verlaufend angeordnet sind. Zwischen den beiden äußeren Lamellenwänden 23 und 26 sowie der Wandung 7 sind wiederum die beiden Heißgas-Verteilerkammern 32 erkennbar. Diese stehen gemeinsam über die Zweigleitung 31, welche mittels der Klappe 51 absperrbar ist, mit der Heißgas-Zuleitung 30 in Verbindung.

Zwischen den Lamellenwandpaaren 23 und 24 bzw. 25 und 26 befinden sich die Glasscherben-Schächte 21 bzw. 22. Deren Querschnittsform ist vorzugsweise die eines langgestreckten Rechtecks, wobei die Heißgas-Zuführung bzw. -Abführung jeweils im Bereich der langen Rechteckseiten erfolgt. In Verbindung mit einer entsprechenden Höhe der Scherbenschächte 21 und 22 ergibt sich so ein sehr großer Durchlaßquerschnitt für das Heißgas auf seinem Weg durch die Glasscherben was für einen vorteilhaft geringen Druckabfall und für günstige niedrige Strömungsgeschwindigkeiten des Heißgases innerhalb der Glasscherben sorgt.

Zwischen den beiden inneren Lamellenwänden 24 und 25 ist schließlich noch die Heißgas-Kammer 42 erkennbar. Auch in dieser Figur ist ersichtlich, daß die beiden inneren Lamellenwände 24 und 25 mittels Verbindung ihrer Stirnenden zu dem Zentralkörper 4 zusammengefaßt sind. Weiter zeigt diese Figur die von dem Zentralkörper 4 nach außen hin abgehenden Betätigungshebel 45, welche über in diesem Ausführungsbeispiel zwei Exzenterantriebe 46 in eine hin- und hergehende Bewegung versetzbar sind.

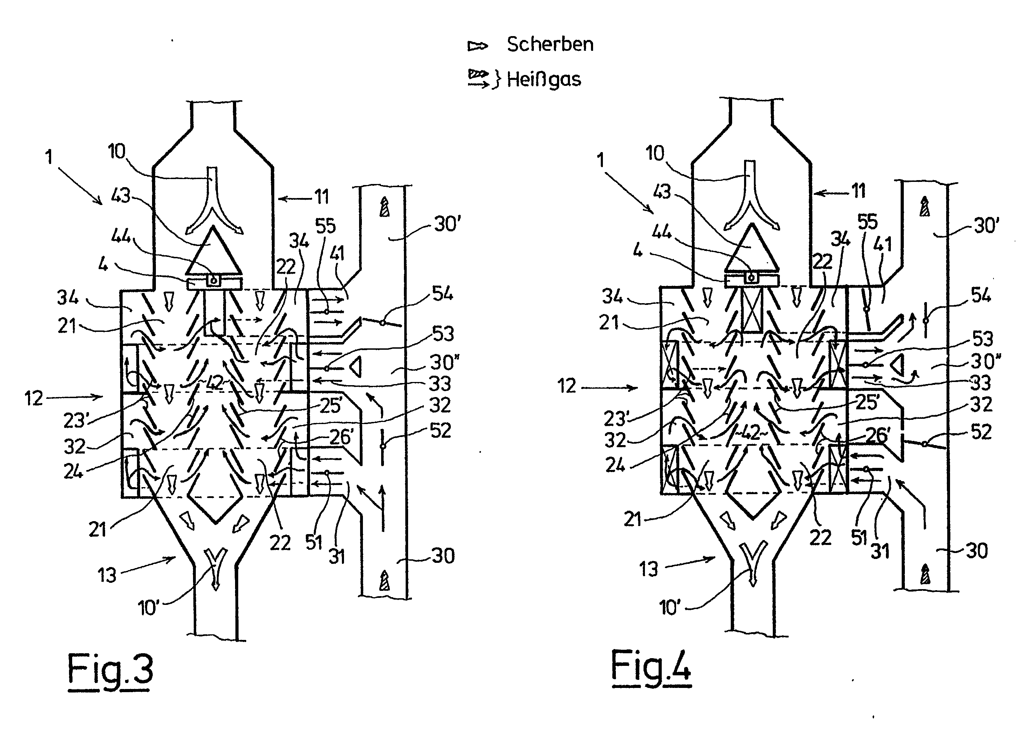

Aufgrund seiner Ausstattung mit mehreren Zweigleitungen 31, 33 und 41 sowie mehreren Klappen 51 bis 55 in den genannten Zweigleitungen sowie in der Heißgas-Zuleitung und -Ableitung 30 bzw. 30' kann der erfindungsgemäße Vorwärmer 1 in unterschiedlichen Betriebsweisen gefahren werden. Zwei bevorzugte Betriebsweisen sind in den Figuren 3 und 4 dargestellt. Der Vorwärmer 1 ist hierzu in einer vereinfachten schematisierten Darstellung gezeichnet, wobei die dort angegebenen Bezugsziffern denen in den Figuren 1 und 2 entsprechen.

Die Figur 3 zeigt den Vorwärmer 1 im sogenannten "Parallelbetrieb". In dieser Betriebsweise gelangt Heißgas von der Heißgas-Zuleitung 30 sowohl über die Zweigleitung 31 mit ihrer geöffneten Klappe 51 als auch über die Zweigleitung 33 mit ihrer geöffneten Klappe 53 in die Kammern 32 und 34. Damit haben alle Kammern 32 und 34 die Funktion von Heißgas-Verteilerkammern. Ein unmittelbares Abströmen von Heißgas aus der Heißgas-Zuleitung 30 in die Heißgas-Ableitung 30' wird durch die zwischen den Abgängen der Zweigleitungen 33 und 41 angeordnete, hier geschlossene Klappe 54 verhindert. Um Heißgas von der Heißgas-Zuleitung 30 zur Zweigleitung 33 gelangen zu lassen, ist die zwischen den Abgängen der Zweigleitung 33 und 31 angeordnete Klappe 52 geöffnet.

Das auf die beschriebene Art und Weise den Kammern 32 und 34 zugeführte Heißgas gelangt von dort unter Durchströmung der Zwischenräume zwischen den Lamellen 23' bzw. 26' in die Scherbenschächte 21 und 22. Aufgrund der oben beschriebenen Formgebung der Schächte 21 und 22 strömt das zugeführte Heißgas im wesentlichen im Querstrom durch die in den Schächten 21 und 22 befindliche Glasscherben und gelangt von dort durch die Zwischenräume zwischen den inneren Lamellen 24' bzw. 25' in die Heißgas-Kammer 42 im Zentralkörper 4. Im Inneren der Heißgas-Kammer 42 im Zentralkörper 4 steigt das Gas nach oben und strömt schließlich durch die Zweigleitung 41 an der in dieser Leitung 41 befindlichen, geöffneten Klappe 55 vorbei in die Heißgas-Ableitung 30'. Von dort kann das Heißgas - gegebenenfalls unter Zwischenschaltung einer Filterung oder Wäsche - einem Kamin zugeführt oder anderweitig verwendet werden.

Bei dieser im vorangehenden beschriebenen Betriebsweise ergibt sich aufgrund des nur einmaligen Durchtrittes des Heißgases durch das Scherbengemenge ein vergleichsweise niedriger Druckabfall des Heißgases auf seinem Weg durch den Vorwärmer 1. Gleichzeitig tritt jedoch das Heißgas mit einer noch relativ hohen Temperatur aus dem Vorwärmer 1 aus.

In der in Figur 4 dargestellten Betriebsweise, dem sogenannten "Serienbetrieb", wird die Wärmeenergie des Heißgases besser ausgenutzt, jedoch ergibt sich hier ein etwas höherer Druckabfall. Die Einstellung dieser zweiten Betriebsweise des Vorwärmers 1 wird dadurch erreicht, daß die Klappen 52 und 55 nunmehr in Schließstellung gebracht sind und daß die Klappe 54 nun geöffnet ist. Hierdurch ergibt sich der anhand der Strömungspfeile sichtbare Verlauf der Heißgas-Strömung durch den Vorwärmer 1. Aufgrund der nun geschlossenen Klappe 52 gelangt Heißgas lediglich durch die Zweigleitung 31 an deren geöffneter Klappe 51 vorbei in die unteren Heißgas-Verteilerkammern 32. Von dort strömt das Heißgas durch die Zwischenräume der Lamellen 23' bzw. 26' im unteren Teil des Erwärmungsteils 12 in die im unteren Teil der Schächte 21 und 22 befindlichen Scherben ein. Nach einem im wesentlichen in Querrichtung zur Scherbenbewegung erfolgenden Durchströmen des Heißgases durch die Scherben gelangt das Gas durch die Zwischenräume zwischen den Lamellen 24' und 25' im unteren Teil des Zentralkörpers 4 in den unteren Teil der Heißgas-Kammer 42 im Zentralkörper 4. In dieser Kammer 42 steigt das Heißgas auf, ohne jedoch durch die Zweigleitung 41 abströmen zu können, da diese mittels ihrer Klappe 55 verschlossen ist. Stattdessen strömt das in der Kammer 42 aufgestiegene Heißgas durch die Zwischenräume der Lamellen 24' und 25' im oberen Teil des Zentralkörpers 4 noch einmal durch die Glasscherben im oberen Teil der Schächte 21 und 22. Nach dem Durchströmen der Scherben gelangt das Gas durch die Zwischenräume zwischen den Lamellen 23' und 26' im oberen Teil des Erwärmungsteils 12 des Vorwärmers 1 in die Kammern 34, welche hier demzufolge die Funktion von Heißgas-Sammelkammern haben. Von hieraus wird das Heißgas mit nunmehr verminderter Temperatur über die Leitung 33 an deren weiterhin geöffneter Klappe 53 und der nunmehr geöffneten Klappe 54 vorbei in die Heißgas-Ableitung 30' geführt.

Bei dieser Betriebsweise wird also der Heißgasstrom zweimal durch die Glasscherben hindurchgeführt, was eine bessere Wärmeausnutzung bei gleichzeitig etwas erhöhtem Druckabfall ergibt.

Mit der vorliegenden Erfindung wird ein Vorwärmer geschaffen, der sowohl einen problemlosen, störungsfreien Durchlauf des Glasscherbengemenges als auch - in weiterer Ausgestaltung der Erfindung - eine flexible Anpassung an unterschiedliche betriebliche Erfordernisse gewährleistet.

## Patentansprüche

1. Vorwärmer für Glasscherben, in welchem in einem Erwärmungsteil von einer Heißgaszuleitung kommendes Heißgas unter Wärmeabgabe an die Scherben durch diese hindurchleitbar und durch eine Heißgas-Ableitung ableitbar ist, und wobei die Scherben zwischen einen Scherbenschacht bildenden und einen Gaseintritt sowie Gasaustritt erlaubenden Führungswänden geführt sind, dadurch gekennzeichnet, daß wenigstens eine der Führungswände (23, 24, 25, 26) relativ zu der anderen Führungswand/den anderen Führungswänden (23 - 26) unter Abstandsveränderung bewegbar ist.

2. Vorwärmer nach Anspruch 1, dadurch gekennzeichnet, daß dieser zwei im wesentlichen parallel zueinander verlaufende, jeweils von zwei etwa parallelen Führungswänden (23, 24; 25, 26) begrenzte Scherbenschächte (21, 22) aufweist, daß die beiden äußeren Führungswände (23, 26) fest angeordnet sind und daß die beiden inneren Führungswände (24, 25) unter Bildung eines Heißgas-Zwischenraumes (42) voneinander beabstandet und zu einem bewegbaren Zentralkörper (4) zusammengefaßt sind.

3. Vorwärmer nach den Ansprüchen 1 und 2, dadurch gekennzeichnet, daß der Zentralkörper (4) an seinem oberen Ende (44) gelenkig aufgehängt und mittels eines Unwucht- oder Exzenterantriebes oder dergleichen (45, 46) kontinuierlich oder periodisch in eine Schwing- oder Rüttelbewegung versetzbar ist.

4. Vorwärmer nach den Ansprüchen 1 bis 3, dadurch gekennzeichnet, daß außenseitig den beiden äußeren Führungswänden (23, 26) eine Heißgas-Verteiler- bzw. Sammelkammer (32, 34) zugeordnet ist und daß diese sowie der Heißgas-Zwischenraum (42) zwischen den beiden inneren Führungswänden (24, 25) jeweils wahlweise einzeln oder in Gruppen mit der Heißgas-Zuleitung (30) oder der Heißgas-Ableitung (30') verbindbar sind.

5. Vorwärmer nach den Ansprüchen 1 bis 4, dadurch gekennzeichnet, daß die beiden äußeren Führungswände (23, 26) jeweils in einen oberen und unteren Teilabschnitt unterteilt sind und daß jedem der Teilabschnitte jeweils eine gesonderte Heißgas-Verteiler - bzw. Sammelkammer (32, 34) zugeordnet ist, welche jeweils wahlweise mit der Heißgas-zuleitung (30) oder der Heißgas-Ableitung (30') verbindbar sind.

6. Vorwärmer nach den Ansprüchen 1 bis 5, dadurch gekennzeichnet, daß die Führungswände (23 - 26) mit jalousieartig angeordneten Lamellen (23', 24', 25', 26') bestückte Lamellenwände (23 - 26) sind.

7. Vorwärmer nach den Ansprüchen 1 bis 6, dadurch gekennzeichnet, daß oberhalb des Erwärmungsteils (12) ein Bunkerteil (11) mit einem einen Gasabschluß bildenden Vorrat von Glasscherben (10) angeordnet ist.

8. Vorwärmer nach den Ansprüchen 1 bis 7, dadurch gekennzeichnet, daß in der Heißgas-Ableitung (30') ein Saugebläse (6) angeordnet ist.

9. Vorwärmer nach den Ansprüchen 1 bis 8, dadurch gekennzeichnet, daß die Heißgas-Zuleitung (30) und die Heißgas-Ableitung (30') über wenigstens eine absperrbare Verbindungsleitung (30") unmittelbar miteinander verbunden sind.

## Claims

1. Pre-heater for glas cullet, in which, in a heating section, hot gas coming from a hot gas feed pipe can be passed through said cullet with heat loss to the cullet and can be discharged through a hot gas outlet pipe, and wherein the cullet is conveyed between guide walls forming a cullet shaft and permitting the entry and exit of gas, characterised in that at least one of the guide walls (23, 24, 25, 26) is movable relative to the other guide wall or walls (23–26) with a change in distance.

2. Pre-heater according to Claim 1, characterised in that said pre-heater has two cullet shafts (21, 22) running substantially parallel to each other and each delimited by two approximately parallel guide walls (23, 24; 25, 26), that the two outer guide walls (23, 26) are stationary and that the two inner guide walls (24, 25) are spaced apart from each other, forming a hot gas space (42) and together form a movable central member (4).

3. Pre-heater according to Claims 1 and 2, characterised in that the central member (4) is suspended in articulated manner at its upper end (44) and can be caused to move continously or periodically in an oscillating or vibrating motion by means of an unbalanced or eccentric drive or the like (45, 46).

4. Pre-heater according to Claims 1 to 3, characterised in that a hot gas distribution chamber or collection chamber (32, 34) is allocated on the outside of the two outer guide walls (23, 26) and that said chambers and the hot gas space (42) between the two inner guide walls (24, 25) can each be selectively connected, individually or in groups, to the hot gas feed pipe (30) or the hot gas outlet pipe (30').

5. Pre-heater according to Claims 1 to 4, characterised in that the two outer guide walls (23, 26) are each divided into an upper and lower section and that each of the sections has one separate hot gas distribution chamber or collection chamber (32, 34) allocated thereto, which chambers can each be selectively connected to the hot gas feed pipe (30) or the hot gas outlet pipe (30').

6. Pre-heater according to Claims 1 to 5, characterised in that the guide walls (23 – 26) are plate walls (23 – 26) equipped with plated (23', 24', 25', 26') disposed in louvre fashion.

7. Pre-heater according to Claims 1 to 6, characterised in that a hopper section (11) with a stock of cullet (10) which forms a gas seal is disposed above the heating section (12).

8. Pre-heater according to Claims 1 to 7, characterised in that an extractro fan (6) is disposed in the hot gas outlet pipe (30').

9. Pre-heater according to Claims 1 to 8, characterised in that the hot gas feed pipe (30) and the hot gas outlet pipe (30') are connected directly together by at least one closable connecting pipe (30").

**Revendications**

1. Préchauffeur pour groisil dans lequel du gaz chaud envoyé dans une section d'échauffement à partir d'une conduite d'arrivée de gaz chaud peut être dirigé à travers le groisil auquel il cède la chaleur et évacué par une conduite d'évacuation de gaz chaud, le groisil étant guidé entre des parois de guidage formant un puits à groisil et permettant l'entrée et la sortie de gaz, caractérisé en ce qu'au moins l'une des parois de guidage (23, 24, 25, 26) peut être déplacée, avec variation de l'écartement, par rapport à l'autre paroi de guidage/aux autres parois de guidage (23 à 26).

2. Préchauffeur selon la revendication 1, caractérisé en ce qu'il comporte deux puits à groisil (21, 22) sensiblement parallèles et respectivement délimités par deux parois de guidage (23, 24; 25, 26) à peu près parallèles, que les deux parois de guidage extérieures (23, 26) sont fixes et que les deux parois de guidage intérieures (24, 25) sont disposées à distance l'une de l'autre, avec formation d'un intervalle à gaz chaud (42), et groupées en un corps central mobile (4).

3. Préchauffeur selon l'une des revendications 1 et 2, caractérisé en ce que le corps central (4) est articulé à son extrémité supérieure (44) et peut être animé, en continu ou périodiquement, d'un mouvement oscillatoire ou vibratoire au moyen d'un entraînement déséquilibré ou à excentrique ou analogue (45, 46).

4. Préchauffeur selon l'une des revendications 1 à 3, caractérisé en ce qu'à l'extérieur des deux parois de guidage extérieures (23, 26) est associée une chambre de distribution et respectivement de captage de gaz chaud (32, 34) et que ladite chambre ainsi que l'intervalle à gaz chaud (42) entre les deux parois de guidage intérieures (24, 25) peuvent être raccordés, au choix individuellement ou en groupe, à la conduite d'arrivée de gaz chaud (30) ou à la conduite d'évacuation de gaz chaud (30').

5. Préchauffeur selon l'une des revendications 1 à 4, caractérisé en ce que les deux parois de guidage extérieures (23, 26) sont subdivisées chacune en une section partielle supérieure et inférieure et qu'à chaque section partielle est associée une chambre de distribution et respectivement de captage de gaz chaud (32, 34) particulière laquelle peut être raccordée, au choix, à la conduite d'arrivée de gaz chaud (30) ou à la conduite d'évacuation de gaz chaud (30').

6. Préchauffeur selon l'une des revendications 1 à 5, caractérisé en ce que les parois de guidage (23 à 26) sont des parois lamellaires (23 à 26) équipées de lamelles (23', 24', 25', 26') disposées en jalousie.

7. Préchauffeur selon l'une des revendications 1 à 6, caractérisé en ce qu'au-dessus de la section d'échauffement (12) est disposée une section de soute (11) avec une réserve de groisil (10) formant un coupe-gaz.

8. Préchauffeur selon l'une des revendications 2 à 7, caractérisé en ce qu'un ventilateur extracteur (6) est monté dans la conduite d'évacuation de gaz chaud (30').

9. Préchauffeur selon l'une des revendications 1 à 8, caractérisé en ce que la conduite d'arrivée de gaz chaud (3) et la conduite d'évacuation de gaz chaud (30') communiquent directement par l'intermédiaire d'au moins une conduite de raccordement (30") pouvant être fermée.

<u>Fig.1</u>

⟹ Scherben

⟹ Heißgas

## Fig.2

Scherben

Heißgas

Fig.3

Fig.4